# EUROPEAN PATENT SPECIFICATION

(11) **EP 2 594 788 B1**
(45) Date of publication and mention of the grant of the patent: **16.11.2016**
(21) Application number: 11382352.0
(22) Date of filing: 17.11.2011
(51) Int. Cl.: F03D 9/00, F03D 7/02, H02K 7/18, H02K 7/20

(54) **Wind turbine**
Windturbine
Éolienne

(43) Date of publication of application: 22.05.2013
(73) Proprietor: ALSTOM Renewable Technologies, 38100 Grenoble (FR)
(72) Inventor: Palomares Rentero, Pedro, 08005 Barcelona (ES)
(74) Representative: de Rooij, Mathieu Julien

(56) References cited:
- EP-A2- 1 128 064
- EP-A2- 1 865 198
- DE-A1- 10 255 745
- DE-A1-102008 051 329
- US-A1- 2008 143 110

## Description

The present invention relates to a wind turbine comprising at least one auxiliary synchronous generator.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. Said rotation generates a torque that is normally transmitted, either directly or through the use of a gearbox, to a main generator through a rotor shaft. And the transmitted torque causes the main generator to produce electricity which is to be supplied into the electrical grid.

Wind turbines may comprise auxiliary systems that may receive power from the main generator when in operation. For example, an important auxiliary power consuming system generally provided on wind turbines is a pitch system. Pitch systems are employed for adapting the position of the blades to varying wind conditions by rotating each blade along its longitudinal axis. Other auxiliary systems generally provided in wind turbines include e.g. the yaw system, lighting, air conditioning systems and lubrication systems.

Some known wind turbines comprise an auxiliary generator for supplying power to some auxiliary power consuming system, such as e.g. to pitch systems. Some of said auxiliary generators are e.g. adapted to provide power to auxiliary systems in case of emergency situations, such as e.g. when power supply from the main generator has been interrupted due to a failure in the wind turbine.

For example, the European patent application EP1865198A2 discloses an emergency pitch drive power supply for a wind turbine, comprising an auxiliary generator for producing electric power, said auxiliary generator being connected to at least one pitch drive typically accommodated inside a hub. Some embodiments of said auxiliary generator comprise permanent magnets fixed to a main frame of the turbine inside the nacelle, and windings mounted to a low-speed rotor shaft for driving a main generator. The windings are connected to the pitch drive via a supply line (comprising e.g. cables) to supply said pitch drive with sufficient electric power. The low-speed shaft is formed as a hollow shaft and the supply line is accommodated inside the hollow shaft. A disadvantage of these embodiments may be that the supply line may be damaged due to the rotation movement of the hub and the shaft, so the risk of failure in the supply of power may be significant.

In other embodiments of EP1865198A2, the permanent magnets are disposed on the end side of nacelle facing the hub, which is connected to the low-speed rotor shaft, and the windings are provided at the hub and face the permanent magnets disposed at nacelle. However, hub and shaft_constitute an overhanging structure which transmits not only torque, but also transmits cyclical bending loads due to the loads on the blades and the weight of the hub and blades. A drawback of these embodiments may be that said additional cyclical bending loads may reduce the uniformity and stability of the air gap made up by the windings and the permanent magnets. Consequently, a relatively poor performance and reduction of the life of the auxiliary generator may result.

### SUMMARY OF THE INVENTION

There thus still exists a need for wind turbines that resolve at least some of the above mentioned problems. It is an object of the present invention to fulfil such a need.

Said object is achieved with a wind turbine according to claim 1.

In a first aspect, the present invention provides a wind turbine comprising a main generator; a tower with a forward extending frame; and a hub carrying one or more blades and being rotatably mounted on the frame in such a way that the frame is provided at least partially internally of the hub. The wind turbine according to this aspect furthermore comprises a plurality of power-producing windings mounted to the hub and a plurality of magnetic field components mounted to the frame, in such a way that said power-producing windings and said magnetic field components make up at least one auxiliary synchronous generator.

Such a configuration permits supplying power generated by the at least one auxiliary synchronous generator to auxiliary power consuming systems (e.g. pitch systems) arranged in the hub without e.g. requiring means for transmitting said power through a shaft. Since both the power-producing windings and the pitch systems are arranged in the hub (i.e. the power is consumed where it is produced), no transmission of power through a shaft is required.

Moreover, said configuration permits having a more constant air gap between the power-producing windings and the magnetic field components. The hub and the frame may be joined through a plurality of bearings, in such a way that the hub and frame behave as a single body under cyclical bending loads due to loads on the blades and the weight of the hub and blades. Therefore, the air gap between the power-producing windings and the magnetic field components remains uniform and stable during operation, which enables good performance and an extended life of the auxiliary synchronous generator(s).

Herein, the term "tower with a forward extending frame" refers to a particular combination of a tower and a frame forwardly extending with respect to the tower, in which the tower and the frame may be the same physical element, or the frame may be fixedly mounted on the tower, or the frame may be rotatably mounted on the tower, etc. For example, in the context of the present invention, the frame may e.g. comprise a front frame and a rear frame, wherein the hub may be rotatably mounted on the front frame, and the rear frame may be rotatably mounted on the tower.

Herein, the term "magnetic field components" is used to indicate those elements of a generator that have the role of creating a magnetic field (magnetic flux) for other elements of the generator to interact with. These "magnetic field components" may comprise e.g. permanent magnets or electromagnets formed by a conducting coil. The term "power-producing windings" is used to indicate the other elements of the generator, in which a voltage is generated when interacting with the magnetic field generated by the "magnetic field components".

In some embodiments, each magnetic field component may be a permanent magnet. Alternatively, each magnetic field component may be an exciting winding. Or alternatively, the plurality of magnetic field components comprises a plurality of permanent magnets and a plurality of exciting windings.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 is a schematic representation of a wind turbine and a region of said wind turbine comprising an auxiliary generator according to a first embodiment of the invention;
Figure 2 is a schematic representation of a region of the wind turbine shown in Figure 1, said region comprising an auxiliary generator according to a second embodiment of the invention;
Figure 3 is a schematic representation of a region of a wind turbine, said region comprising an auxiliary generator according to a third embodiment of the invention;
Figure 4 is a schematic representation of a region of a wind turbine, said region comprising a plurality of auxiliary generators according to a fourth embodiment of the invention;
Figure 5 is a schematic representation of a region of a wind turbine, said region comprising an auxiliary generator and a plurality of pitch systems according to embodiments of the invention; and
Figure 6 is a schematic representation of a region of a wind turbine, said region comprising an auxiliary generator and a plurality of pitch systems according to some embodiments of the invention.

### DETAILED DESCRIPTION OF EMBODIMENTS OF THE INVENTION

In the following description, numerous specific details are set forth in order to provide a thorough understanding of the present invention. It will be understood by one skilled in the art however, that the present invention may be practiced without some or all of these specific details. In other instances, well known elements have not been described in detail in order not to unnecessarily obscure the description of the present invention.

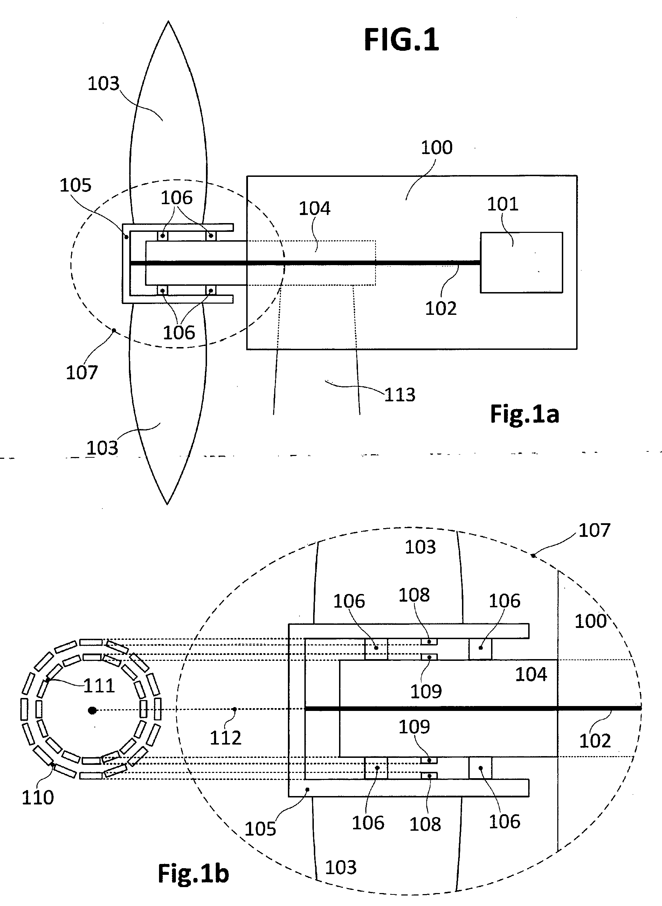

Figure 1 schematically represents a wind turbine and a region of said wind turbine comprising an auxiliary synchronous generator according to a first embodiment of the invention. In particular, Figure 1a refers to a cross section of said wind turbine and Figure 1b refers to a cross section of said region of said wind turbine.

The wind turbine of Figure 1a comprises a tower 113 with a forward extending frame 104, a nacelle 100 arranged on top of the tower, a main generator 101, a hub 105 carrying one or more blades 103, and a shaft 102 for transmitting torque from the hub 105 to the main generator 101 when the hub 105 rotates. The hub 105 is rotatably mounted on the frame 104 through a plurality of bearings 106, in such a way that the frame 104 is provided at least partially internally of the hub 105.

The configuration of Figure 1 a has the advantage of providing a very high stability between the hub 105 and the frame 104, even when the hub rotates at a high speed. The hub 105 and the frame 104 are joined through the bearings 106 in such a way that the hub 105 and frame 104 behave as a single body under cyclical bending loads, which may be due to loads on the blades 103 and the weight of the hub 105 and blades 103. In other words, movements/deformations caused by the cyclical bending loads are jointly suffered by the hub 105 and the frame 104.

The Figure 1 b.shows a zoomed view of a region 107 of Figure 1a, said region 107 additionally showing (with respect to Figure 1 a) a plurality of power-producing windings 108 mounted to the hub 105 and a plurality of magnetic field components 109 mounted to the frame 104, in such a way that said power producing windings 108 and said magnetic field components 109 make up an auxiliary synchronous generator.

In the embodiment of Figure 1b, the magnetic field components 109 are mounted to the frame 104 in a zone substantially halfway between a distal end and a proximal end of the frame 104 with respect to the tower 113. The power-producing windings 108 are mounted to the hub 105 in such a way that the constituted auxiliary synchronous generator is a substantially ring-shaped generator. Said ring-shaped generator comprising a first ring 110 of power-producing windings 108 and a second ring 111 of magnetic field components 109, said first ring 110 arranged radially outside said second ring 111.

An aspect of the configuration shown in Figure 1b is that the power-producing windings 108 and the magnetic field components 109 constitute an air gap that, thanks to the very stable structure commented with respect to Figure 1 a, remains uniform and stable during operation. This uniform and stable air gap enables good performance and an extended life of the auxiliary synchronous generator.

Another aspect of the configuration of Figure 1b is that power from power-producing windings 108 can be supplied to auxiliary power consuming systems (e.g. pitch systems) arranged in the hub 105 without requiring means for transmitting said power through the shaft 102, since both the power-producing windings 108 and the pitch systems are arranged in the hub 105.

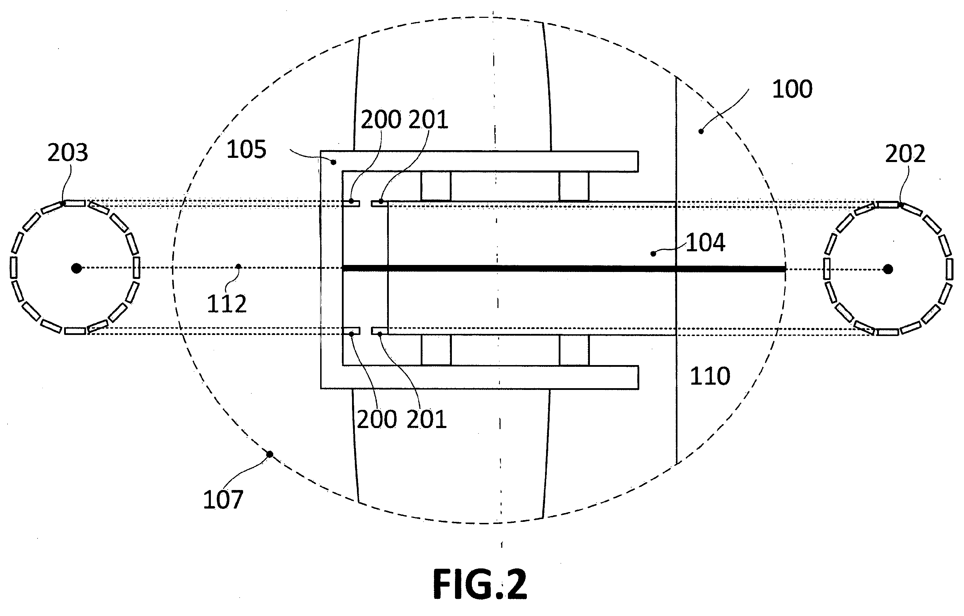

Figure 2 is a schematic representation of a region 107 of the wind turbine shown in Figure 1, said region 107 comprising a plurality of magnetic field components 201 mounted in a distal end region of the frame 104 with respect to the tower 113. The region 107 also comprises a plurality of power-producing windings 200 mounted to the hub 105 in such a way that an auxiliary synchronous generator is constituted. This generator is a substantially ring-shaped generator comprising a first ring 203 of power-producing windings 200 and a second ring 202 of magnetic field components 201, said first and second rings axially facing each other with respect to the axis 112 of rotation of the hub 105.

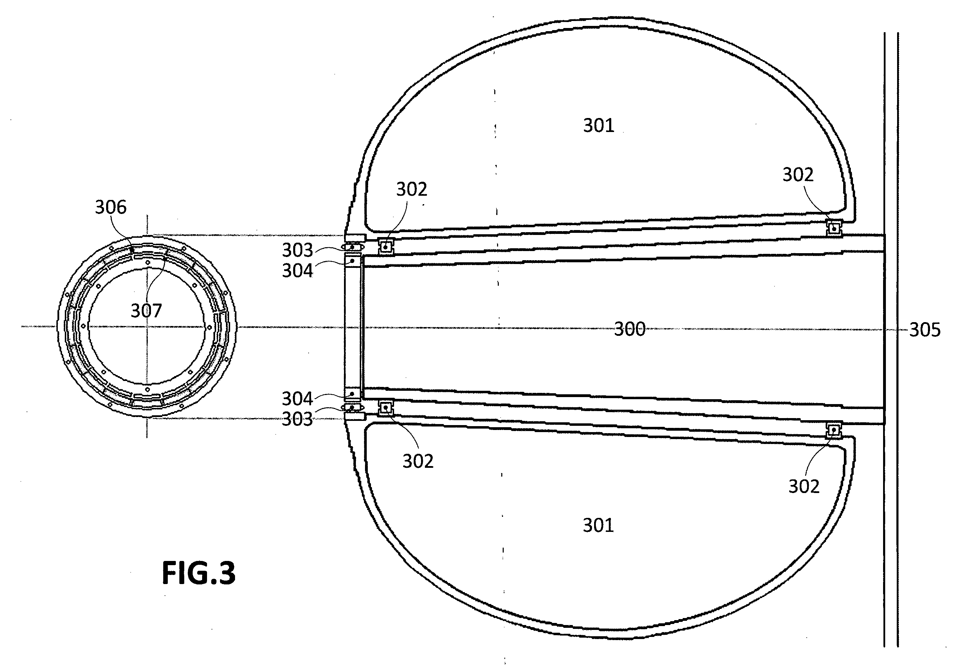

Figure 3 is a schematic representation of a region of a wind turbine, said region comprising an auxiliary generator according to a third embodiment of the invention. This embodiment is similar to the one shown in Figure 1, in which a hub 301 is rotatably mounted on a frame 300 through a plurality of bearings 302, in such a way that the frame 300 is provided at least partially internally of the hub 301.

The configuration of Figure 3 comprises a plurality of magnetic field components 304 mounted in a distal end region of the frame 300. This structure also comprises a plurality of power-producing windings 303 mounted to the hub 301. Said magnetic field components 304 and power-producing windings 303 are mounted in such a way that they constitute an auxiliary synchronous generator. This generator is a substantially ring-shaped generator comprising a first ring 306 of power-producing windings 303 and a second ring 307 of magnetic field components 304, said first ring 306 arranged radially outside said second ring 307.

The embodiment of Figure 3 may be comprised in a configuration satisfying the principles described in relation to Figure 1a, such that the power producing windings and the magnetic field components constitute an air gap uniform and stable in any operational circumstances.

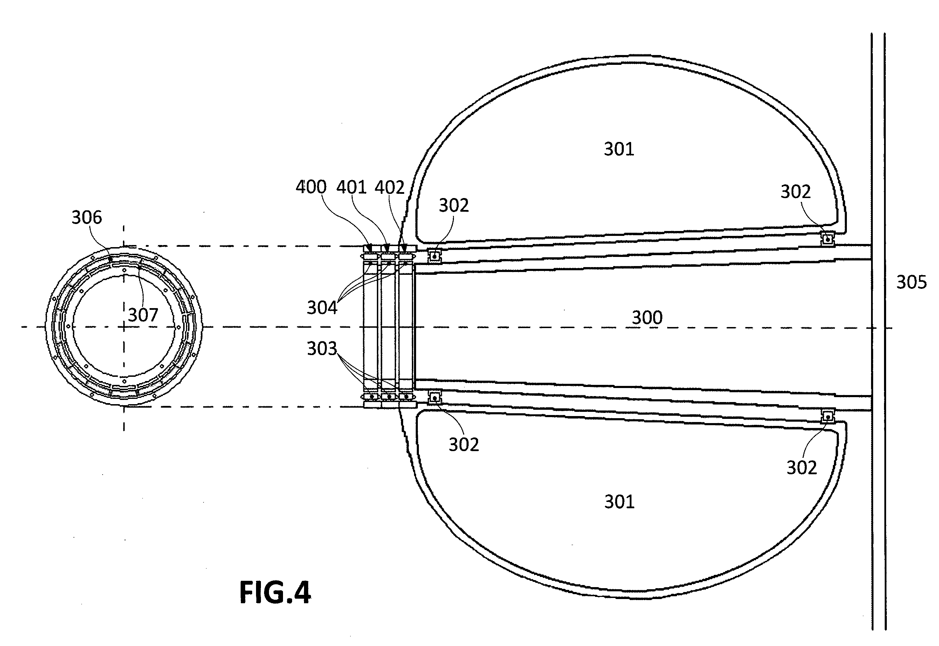

Figure 4 is a schematic representation of a region of a wind turbine similar to the region of Figure 3, with the_ only difference that said region comprises more than one auxiliary generator, in accordance with a further embodiment of the invention. The structure of Figure 4 comprises a plurality of magnetic field components 304 mounted in a distal end region of the frame 300. This structure also comprises a plurality of power-producing windings 303 mounted to the hub 301. Said magnetic field components 304 and power-producing windings 303 are arranged in such a way that they constitute three separate auxiliary synchronous generators 400,401,402. Each of said three generators 400,401,402 is a substantially ring-shaped generator comprising a first ring 306 of power-producing windings 303 and a second ring 307 of magnetic field components 304, said first ring 306 arranged radially outside said second ring 307.

The configuration of Figure 4 may be comprised in a configuration satisfying the principles described in relation to Figure 1a, such that each constituted auxiliary synchronous generator comprises an air gap that is uniform and stable under operational circumstances.

An aspect of the embodiments of Figures 2 to 4, in which the magnetic field components are mounted in a distal end region of the frame with respect to the tower, is that they permit maintenance personnel to have a better access to the one or more constituted auxiliary synchronous generators when said personnel require access for e.g. reparation or maintenance tasks.

In all the embodiments supported by Figures 1 to 4, each magnetic field component may be a permanent magnet or, alternatively, each magnetic field component may be an exciting winding or, alternatively, the plurality of magnetic field may comprise a plurality of permanent magnets and a plurality of exciting windings.

An aspect of the embodiments in which the plurality of magnetic field components comprises one or more exciting windings is that said exciting windings require a connection with a power source. This connection with the power source has the role of supplying power to said exciting windings in order to cause a magnetic field for inducing a voltage in the related power producing windings when the hub rotates.

An aspect of the embodiments in which the plurality of magnetic field components comprises only permanent magnets is that a connection with a power source is not required.

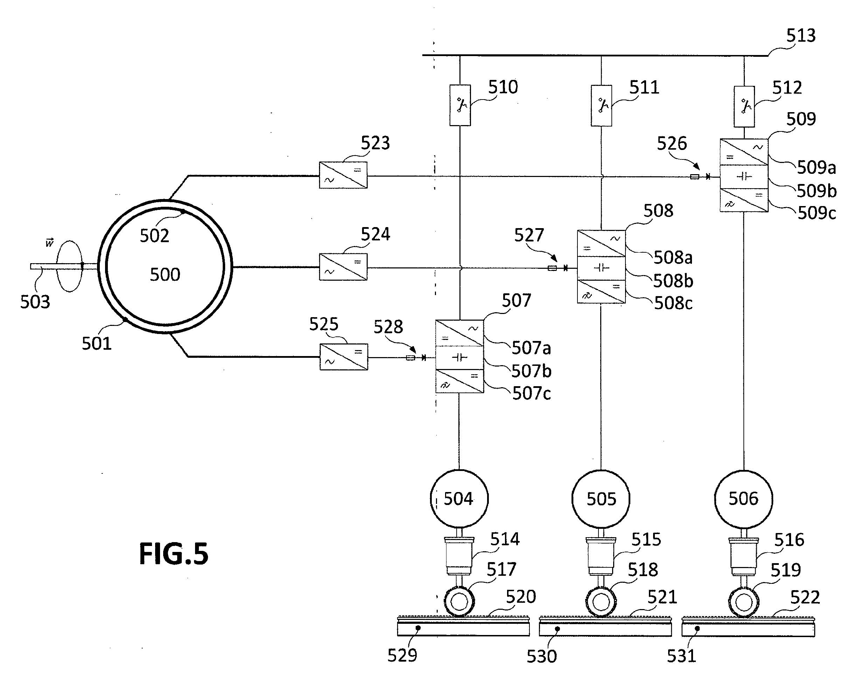

Figure 5 is a schematic representation of a region of a wind turbine, said region comprising an auxiliary generator and a plurality of pitch systems according to a fifth embodiment of the invention. This plurality of pitch systems may comprise a pitch system for each blade of the wind turbine. The configuration of the auxiliary generator 500 may follow e.g. the principles explained in relation to any of Figures 1 to 4. Thus, for instance, the auxiliary generator 500 may comprise a first ring 501 of power-producing windings and a second ring 502 of magnetic field components, said first ring 501 arranged radially outside said second ring 502. Moreover, this auxiliary generator 500 may be a synchronous multi winding generator, wherein the power-producing windings of the first ring 501 make up an independent set of power-producing windings for each of the pitch systems.

A first pitch system may comprise a pitch motor 504 operationally connected to at least one actuator for changing the pitch angle of its related blade. Thus, for example, the movement produced by the motor 504 may be transmitted through suitable transmission means comprising, for example, a reduction gearing 514 and a pinion 517 to an annular gear 520 provided at a root 529 of the blade. Said pitch system may further comprise a power electronic converter 507 connected with its related pitch motor 504, such that the converter 507 can control the related pitch motor 504.

A second pitch system may also comprise a pitch motor 505, a reduction gearing 515, a pinion 518, an annular gear 521 provided at a root 530 of the blade, and a power electronic converter 508, all said elements being configured in the same way as explained in the previous paragraph. Finally, a third pitch system may also comprise a pitch motor 506, a reduction gearing 516, a pinion 519, an annular gear 522 provided at a root 531 of the blade, and a power electronic converter 509, all said elements being configured in the same way as explained in the previous paragraph.

Each pitch system may comprise a control unit (not shown), such as for example a PLC (Programmable Logic Controller), being programmed for producing the necessary signals for an optimal operation of the system. This control unit may control each of the provided power electronic converters 507-509 to vary the speed of the pitch motors 504-506 such that they assume a correct position in accordance with e.g. wind conditions. Optionally, each of the control units may be integrated within its related power electronic converter 507-509.

Each converter 507-509 may be connected with its related independent set of power-producing windings of the generator 500, such that the converter 507-509 can receive power from said related independent set of power-producing windings. Moreover, each converter 507-509 may be connected with a main power line 513, such that the converter 507-509 can also receive power from the main power line 513. Thus, when e.g. the auxiliary generator 500 does not produce power, the converters 507-509 can receive power from said main line 513, so that the pitch systems may continue their operation.

Having each converter 507-509 connected with the main power line 513 has the advantage of ensuring operation of the pitch systems when the auxiliary generator 500 is not producing power when e.g. the hub does not rotate. Thus, the connection with said main power line may be particularly advantageous for initiating rotation of the hub by positioning the blades conveniently and/for granting power supply when the hub rotates but power from power producing windings has been interrupted due to e.g. a failure.

A first converter 507 may comprise the necessary elements for converting AC power from the main power line 513 into DC power, and for finally converting said DC power into variable AC power. But this configuration may be varied in accordance with the characteristics of the corresponding pitch motor 504 and/or the power line 513. For example, said converter 507 may comprise a rectifier 507a, a DC link 507b, and an inverter 507c. In case of the power line 513 being a DC power line, only conversion of DC power into variable AC power will be required (DC link 507b, and inverter 507c). As these kinds of converters are generally well known in the technical field, no further detailed descriptions will be provided. In the particular examples illustrated here, the pitch motors are assumed to be AC motors. The invention however is not limited to this particular choice as suitable DC motors may also be used. The other two converters 508,509 may function in a similar way.

The connection between each independent set of power-producing windings and its related converter 507-509 may comprise a rectifier 523-525 for converting AC power from each independent set of power-producing windings into DC power. Therefore, each of said rectifiers 523-525 may be connected with the DC link 507b-509b of its related converter 507-509, such that DC power from the rectifier 523-525 may be finally converted into variable AC power to be supplied to its related motor 504-506.

Moreover, some switching systems 510-512 for the converters 507-509 may be provided in each connection between the main power line 513 and a converter. These switching systems may be based on means for interrupting or attenuating the electrical current/voltage, as for example on-off switches, push switches, and so on. These switching systems may be of particular relevance in situations of e.g. electrical surge, in which case the components of the system may be damaged. The control unit may activate/deactivate the switching systems by sending corresponding on-off signals. As these kinds of elements are generally well known in the technical field, no further detailed description will be provided in this context.

Furthermore, each connection between an independent set of power-producing windings of the generator 500 and its related converter 507-509 may comprise protective elements 526-528 (e.g. fuses and/or diodes), aimed at avoiding damage in the power-producing windings as consequence of retro-voltages from the motors 504-506.

Switching systems and protective elements have been shown in particular positions of the circuit shown in Figure 5, but it will be understood that said or similar switching systems and/or protective elements may be provided in accordance with specific needs of a particular design in order to protect any of the elements connected by said connections from e.g. retro voltages and/or electrical surges.

Alternatively or in addition to the connection with a main power line 513, each pitch system may comprise a power storage system, such as e.g. a battery or an ultra-capacitor (also known as super-capacitor), electrically connected with its related power-producing windings and with its related power electronic converter 507-509. Thus, each of said power storage systems can store power from its related power-producing windings when the generator 500 is in operation (i.e. producing power). Besides, each of said power storage systems can supply the stored power to its related power electronic converter 507-509 when e.g. the generator 500 is not in operation.

Such a power storage systems may e.g. consist of batteries or ultra-capacitors, and have the function of providing DC power to the converters 507-509. Each connection between a power storage system and its related converter 507-509 may comprise protective elements, e.g. fuses and diodes, aimed at avoiding damage in the batteries as consequence of retro-voltages from the converters 507-509. Each power storage system may further be connected with the main power line 513, so that the battery or ultra-capacitor may also store power from the main power line 513.

Such a power storage systems have the function of providing DC power to the converters when it is needed, i.e. when power from the main power line is required but the main power line fails. Under normal circumstances, the power storage is charged by the main power line and/or by the auxiliary generators. In alternative embodiments, the power storage may be stand-alone.

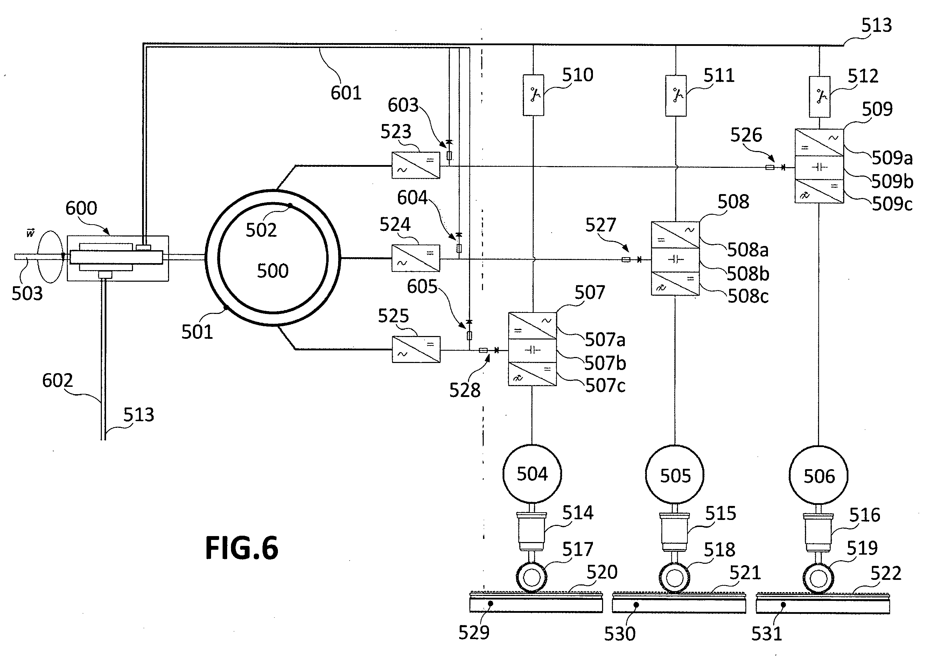

Alternatively to having a multi winding generator 500 for all the pitch drives, as shown in Figure 5, the wind turbine could comprise a "mono" winding generator 500 ("mono" in the sense of having a single set of power-producing windings; this set may however comprises multiple phases) for each of the pitch systems. For example, the configuration of Figure 4, which comprises a plurality of generators 400,401,402 could be suitable for implementing said alternative of having a "mono" winding motor 500 for each pitch system. Alternatively to having a single multi winding generator for all the pitch drives together and to having a "mono" winding generator for each separate pitch system, the wind turbine could also comprise a "mono" winding generator for all the pitch systems. This alternative configuration may be different from e.g. the configurations of Figures 5 and 6 in that all the converters 507-509 may be connected to the single set of power-producing windings 501 of the generator 500. This alternative configuration may also differ from e.g. the configurations of Figures 5 and 6 in that said connection between converters 507-509 and power-producing windings 501 may comprise just a single rectifier for converting AC power from the power-producing windings into DC power.

Figure 6 is a schematic representation of a region of a wind turbine, said region comprising an auxiliary generator and a plurality of pitch systems according to embodiments of the invention. This region is similar to the region of Figure 5, with the only difference of additionally showing a slip ring 600 mounted on a rotor shaft 503 and electrically connected with the power-producing windings. This particular feature permits transmitting power from the hub to other parts of the wind turbine or vice versa. For example, a heating and/or a yaw system (not arranged in the hub) could be powered from power-producing windings (arranged in the hub) thanks to such a slip ring.

In embodiments for which each pitch system further comprises a power storage system, the slip ring and each power storage system may be electrically connected, such that the slip ring can further receive power from each power storage system.

Each connection between the slip ring and the power-producing windings and/or a power storage system may comprise protective elements 605,604,603 (e.g. fuses and/or diodes), aimed at avoiding damage in the power-producing windings and/or in the power storage systems as consequence of retro-voltages from the motors 504-506.

Some embodiments of the wind turbine may be suitable to stop rotation of the hub by using power from rotation of the hub when an emergency situation occurs (e.g. when a main power line fails) and, consequently, interruption of the operation of the wind turbine may be required. In particular, this operation may be implemented in those embodiments comprising a hub carrying at least one blade, a pitch system for each blade, and at least one auxiliary synchronous generator based on permanent magnets and configured to generate power from rotation of the hub. Each pitch system may perform a method comprising use of power from the auxiliary synchronous generator (i.e. from rotation of the hub) to move its related blade to a vane position (i.e. to stop rotation of the hub).

The permanent magnets of the embodiments of the previous paragraph may be replaced by exciting windings to satisfy the same role of magnetic field components. Such alternative embodiments of the wind turbine based on exciting windings may also be suitable to stop rotation of the hub in a similar way to that described in the previous paragraph. In these embodiments, however, supply of power to the exciting windings is necessary to cause the corresponding magnetic field in the exciting windings. Thus, the wind turbine may comprise at least one power storage system to supply power to the exciting windings when e.g. a main power line fails. In such a configuration, each pitch system may be configured to perform an alternative method very similar to the one described in the previous paragraph but additionally taking into account said supply of power to the exciting windings from the power storage system.

However, in the embodiments described in the two previous paragraphs, particular circumstances may cause that rotation of the hub is stopped before the blades have reached the vane position. Therefore, each pitch system may further comprise a power storage system and the method of rotating the blades to a vane position may need to use power from said power storage systems to complete movement of the blades.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Thus, it is intended that the scope of the present invention herein disclosed should not be limited by the particular disclosed embodiments described before, but should be determined only by a fair reading of the claims that follow.

## Claims

1. Wind turbine comprising:
a main generator (101);
a tower (113) with a forward extending frame (104);
a hub (105) carrying one or more blades (103); and
a plurality of power-producing windings (108) mounted to the hub (105) and a plurality of magnetic field components (109) mounted to the frame (104), in such a way that said power-producing windings (108) and said magnetic field components (109) make up at least one auxiliary synchronous generator;
**characterized in that:**
the hub (105) is rotatably mounted on the frame (104) through a plurality of bearings (106) in such a way that the frame (104) is provided at least partially internally of the hub (105).

2. Wind turbine according to claim 1, wherein the power-producing windings (108) are mounted to the hub (105) and the magnetic field components (109) are mounted to the frame (104) in such a way that each resulting auxiliary synchronous generator is a substantially ring-shaped generator comprising a first ring (110) of power-producing windings (108) and a second ring (111) of magnetic field components (109), said first ring (110) arranged radially outside said second ring (111).

3. Wind turbine according to claim 1, wherein the power-producing windings (200) are mounted to the hub (105) and the magnetic field components (201) are mounted to the frame (104) in such a way that each resulting auxiliary synchronous generator is a substantially ring-shaped generator comprising a first ring (203) of power-producing windings (200) and a second ring (202) of magnetic field components (201), said first and second rings (203, 202) axially facing each other with respect to the axis (112) of rotation of the hub (105).

4. Wind turbine according to any of claims 1 to 3, wherein the magnetic field components (201) are mounted in a distal end region of the frame (104) with respect to the tower (113).

5. Wind turbine according to any of claims 1 to 4, wherein each power-producing winding (200) is a polyphase power-producing winding (200).

6. Wind turbine according to any of claims 1 to 5, wherein each magnetic field component (201) is of one of the following types: permanent magnet, exciting winding.

7. Wind turbine according to any of claims 1 to 6, comprising a plurality of blades (103), each of the blades (103) having a pitch system, each pitch system comprising a pitch motor (504 - 506) operationally connected to at least one actuator for changing the pitch angle of its related blade (103), and a power electronic converter (507 - 509) for controlling the pitch motor (504 - 506); wherein the plurality of power-producing windings (501) and the plurality of magnetic field components (502) make up an auxiliary synchronous generator (500) for each of the pitch systems; and wherein each of the auxiliary synchronous generators (500) and its related power electronic converter (507 - 509) are electrically connected.

8. Wind turbine according to claim 7, wherein the plurality of power-producing windings (501) and the plurality of magnetic field components (502) make up at least one further auxiliary synchronous generator for supplying power to at least one other auxiliary system.

9. Wind turbine according to any of claims 1 to 6, comprising a plurality of blades (103), each of the blades (103) having a pitch system, each pitch system comprising a pitch motor (504 - 506) operationally connected to at least one actuator for changing the pitch angle of its related blade (103), and a power electronic converter (507 - 509) for controlling the pitch motor (504 - 506); wherein the plurality of power-producing windings (501) and the plurality of magnetic field components (502) make up an auxiliary synchronous multi winding generator (500) comprising an independent set of power-producing windings (501) for each of the pitch systems; and wherein each of the independent set of power-producing windings (501) and its related power electronic converter (507 - 509) are electrically connected.

10. Wind turbine according to claim 9, wherein the auxiliary synchronous multi winding generator (500) comprises at least one further independent set of power-producing windings for supplying power to at least one other auxiliary system.

11. Wind turbine according to any of claims 7 to 10, wherein each power electronic converter (507 - 509) is electrically connected with a main power line (513), such that each power electronic converter (507 - 509) can receive power from said main power line (513).

12. Wind turbine according to any of claims 7 to 11, wherein each pitch system further comprises a power storage system electrically connected with its related power-producing windings (501) and with its related power electronic converter (507 - 509), such that the power storage system can store power from the related power-producing windings (501) when the hub (105) is rotating, and can supply said stored power to the related power electronic converter (507 - 509).

13. Wind turbine according to claim 12, wherein each power storage system is electrically connected with a main power line (513), such that each power storage system can store power from said main power line (513).

14. Wind turbine according to any of claims 1 to 13, further comprising a shaft (503) operationally connected with the hub (105), such that rotational movement of the hub (105) can be transmitted through the shaft (503), and further comprising a slip ring (600) mounted on the shaft (503) and electrically connected with the power-producing windings (501), such that power from the power-producing windings (501) can be transmitted to an auxiliary system not mounted in/to the hub (105).

15. Wind turbine according to claim 14 when depending on any of claims 12 or 13, wherein the slip ring (600) and each power storage system are electrically connected, such that the slip ring (600) can receive power from each power storage system.

## Patentansprüche

1. Eine Windturbine umfassend:
einen Hauptgenerator (101);
einen Turm (113) mit einem sich nach vorne erstreckenden Rahmen (104);
eine Nabe (105), die ein oder mehrere Blätter (103) trägt; und
eine Vielzahl von stromerzeugenden Wicklungen (108), die an der Nabe (105) montiert sind und eine Vielzahl von Magnetfeldbauteilen (109), die an dem Rahmen (104) derart montiert sind, dass die stromerzeugenden Wicklungen (108) und die Magnetfeldbauteile (109) mindestens einen Hilfssynchrongenerator ausmachen;
**dadurch gekennzeichnet, dass**:
die Nabe (105) drehbar auf dem Rahmen (104) mittels einer Vielzahl von Lagern (106) derart montiert ist, dass der Rahmen (104) mindestens teilweise innerhalb der Nabe (105) bereitgestellt ist.

2. Windturbine nach Anspruch 1, wobei die stromerzeugenden Wicklungen (108) an der Nabe (105) montiert sind und die Magnetfeldbauteile (109) an dem Rahmen (104) derart montiert sind, dass jeder resultierende Hilfssynchrongenerator ein im Wesentlichen ringförmiger Generator umfassend einen ersten Ring (110) von stromerzeugenden Wicklungen (108) und einen zweiten Ring (111) von Magnetfeldbauteilen (109) ist, wobei der erste Ring (110) radial außerhalb des zweiten Ringes (111) angeordnet ist.

3. Windturbine nach Anspruch 1, wobei die stromerzeugenden Wicklungen (200) an der Nabe (105) montiert sind und die Magnetfeldbauteile (201) an dem Rahmen (104) derart montiert sind, dass jeder resultierende Hilfssynchrongenerator ein im Wesentlichen ringförmiger Generator umfassend einen ersten Ring (203) von stromerzeugenden Wicklungen (200) und einen zweiten Ring (202) von Magnetfeldbauteilen (201) ist, wobei der erste und der zweite Ring (203, 202) bezüglich der Drehachse (112) der Nabe (105) axial gegenüber einander angeordnet sind.

4. Windturbine nach einem der Ansprüche 1 bis 3, wobei die Magnetfeldbauteile (201) in einem distalen Endbereich des Rahmens (104) bezüglich des Turmes (113) montiert sind.

5. Windturbine nach einem der Ansprüche 1 bis 4, wobei jede stromerzeugende Wicklung (200) eine mehrphasige stromerzeugende Wicklung (200) ist.

6. Windturbine nach einem der Ansprüche 1 bis 5, wobei jedes Magnetfeldbauteil (201) einer der folgenden Sorten ist: Dauermagnet, Erregerwicklung.

7. Windturbine nach einem der Ansprüche 1 bis 6, umfassend eine Vielzahl von Blättern (103), wobei jedes Blatt (103) ein Blattverstellsystem hat, wobei jedes Blattverstellsystem einen Blattverstellantrieb (504 - 506) umfasst, der mit mindestens einem Aktor zur Änderung des Blattverstellwinkels seines zugehörigen Blattes (103) operativ verbunden ist, und einen leistungselektronischen Umrichter (507 - 509) zur Steuerung des Blattverstellantriebs (504 - 506); wobei die Vielzahl von stromerzeugenden Wicklungen (501) und die Vielzahl von Magnetfeldbauteilen (502) einen Hilfssynchrongenerator (500) für jedes Blattverstellsystem ausmachen; und wobei jeder Hilfssynchrongenerator (500) und sein zugehöriger leistungselektronischer Umrichter (507 - 509) elektrisch verbunden sind.

8. Windturbine nach Anspruch 7, wobei die Vielzahl von stromerzeugenden Wicklungen (501) und die Vielzahl von Magnetfeldbauteilen (502) mindestens einen weiteren Hilfssynchrongenerator zur Versorgung von Strom an mindestens an weiteres Hilfssystem ausmachen.

9. Windturbine nach einem der Ansprüche 1 bis 6, umfassend eine Vielzahl von Blättern (103), wobei jedes Blatt (103) ein Blattverstellsystem hat, wobei jedes Blattverstellsystem einen Blattverstellantrieb (504 - 506) umfasst, der mit mindestens einem Aktor zur Änderung des Blattverstellwinkels seines zugehörigen Blattes (103) operativ verbunden ist, und einen leistungselektronischen Umrichter (507 - 509) zur Steuerung des Blattverstellantriebs (504 - 506); wobei die Vielzahl von stromerzeugenden Wicklungen (501) und die Vielzahl von Magnetfeldbauteilen (502) einen Hilfssynchrongenerator (500) mit mehreren Wicklungen ausmachen, der eine unabhängige Reihe von stromerzeugenden Wicklungen (501) für jedes Blattverstellsystem umfasst; und wobei jede unabhängige Reihe von stromerzeugenden Wicklungen (501) und ihr zugehöriger leistungselektronischer Umrichter (507 - 509) elektrisch verbunden sind.

10. Windturbine nach Anspruch 9, wobei der Hilfssynchrongenerator (500) mit mehreren Wicklungen mindestens eine weitere unabhängige Reihe von stromerzeugenden Wicklungen zur Versorgung von Strom an mindestens ein weiteres Hilfssystem umfasst.

11. Windturbine nach einem der Ansprüche 7 bis 10, wobei jeder leistungselektronische Umrichter (507 - 509) mit einer Hauptstromleitung (513) elektrisch verbunden ist, so dass jeder leistungselektronische Umrichter (507 - 509) Strom von der Hauptstromleitung (513) erhalten kann.

12. Windturbine nach einem der Ansprüche 7 bis 11, wobei jedes Blattverstellsystem weiterhin ein Stromspeichersystem umfasst, das mit seinen zugehörigen stromerzeugenden Wicklungen (501) und mit seinem zugehörigen leistungselektronischen Umrichter (507 - 509) elektrisch verbunden ist, so dass das Stromspeichersystem Strom aus den zugehörigen stromerzeugenden Wicklungen (501) speichern kann, wenn die Nabe (105) dreht und den zugehörigen leistungselektronischen Umrichter (507 - 509) mit dem gespeicherten Strom versorgen kann.

13. Windturbine nach Anspruch 12, wobei jedes Stromspeichersystem mit einer Hauptstromleitung (513) elektrisch verbunden ist, so dass jedes Stromspeichersystem Strom aus der Hauptstromleitung (513) speichern kann.

14. Windturbine nach einem der Ansprüche 1 bis 13, weiterhin umfassend eine Welle (503), die mit der Nabe (105) operativ verbunden ist, so dass eine Drehbewegung der Nabe (105) durch die Welle (503) übertragen werden kann, und weiterhin umfassend einen Schleifring (600), der auf der Welle (503) montiert ist und mit den stromerzeugenden Wicklungen (501) verbunden ist, so dass Strom aus den stromerzeugenden Wicklungen (501) an ein Hilfssystem übertragen werden kann, das in/an der Nabe (105) nicht montiert ist.

15. Windturbine nach Anspruch 14, wenn dieser von einem der Ansprüche 12 oder 13 abhängt, wobei der Schleifring (600) und jedes Stromspeichersystem elektrisch verbunden sind, so dass der Schleifring (600) Strom von jedem Stromspeichersystem erhalten kann.

## Revendications

1. Éolienne comprenant :
un générateur principal (101) ;
une tour (113) avec un châssis s'étendant vers l'avant (104) ;
un moyeu (105) portant une ou plusieurs pales (103) ; et
une pluralité de enroulements producteurs d'électricité (108) fixés au moyeu (105) et une pluralité de composants de champ magnétique (109) fixés au châssis (104), de façon que lesdits enroulements producteurs d'électricité (108) et lesdits composants de champ magnétique (109) constituent au moins un générateur synchrone auxiliaire ;
**caractérisée en ce que** ;
le moyeu (105) est monté à rotation sur le châssis (104) moyennant une pluralité de paliers (106) de façon que le châssis (104) est fourni au moins en partie dans l'intérieur du moyeu (105).

2. Éolienne selon la revendication 1, dans laquelle les enroulements producteurs d'électricité (108) sont fixés au moyeu (105) et les composants de champ magnétique (109) sont fixés au châssis (104) de façon que chaque générateur synchrone auxiliaire résultant est un générateur essentiellement annulaire comprenant un premier anneau (110) d'enroulements producteurs d'électricité (108) et un deuxième anneau (111) de composants de champ magnétique (109), étant ledit premier anneau (110) disposé de façon radiale hors dudit deuxième anneau (111).

3. Éolienne selon la revendication 1, dans laquelle les enroulements producteurs d'électricité (200) sont fixés au moyeu (105) et les composants de champ magnétique (201) sont fixés au châssis (104) de façon que chaque générateur synchrone auxiliaire résultant est un générateur essentiellement annulaire comprenant un premier anneau (203) d'enroulements producteurs d'électricité (200) et un deuxième anneau (202) de composants de champ magnétique (201), étant lesdits anneaux premier et deuxième (203, 202) disposés axialement l'un en face de l'autre par rapport à l'axe (112) de rotation du moyeu (105).

4. Éolienne selon l'une quelconque des revendications 1 à 3, dans laquelle les composants de champ magnétique (201) sont montés dans une région de bout distale du châssis (104) par rapport à la tour (113).

5. Éolienne selon l'une quelconque des revendications 1 à 4, dans laquelle chaque enroulement producteur d'électricité (200) est un enroulement producteur d'électricité (200) polyphasé.

6. Éolienne selon l'une quelconque des revendications 1 à 5, dans laquelle chaque composant de champ magnétique (201) est d'un des types suivants :
aimant permanent, enroulement d'excitation.

7. Éolienne selon l'une quelconque des revendications 1 à 6, comprenant une pluralité de pales (103), ayant chacune des pales (103) un système de réglage de pas de pale, comprenant chaque système de réglage de pas de pale un moteur de pas de pale (504 - 506) relié de façon opérationnelle à au moins un actionneur pour changer l'angle de pas de pale de sa pale (103) associée, et un convertisseur électronique de puissance (507 - 509) pour contrôler le moteur de pas de pale (504 - 506) ; dans laquelle la pluralité d'enroulements producteurs d'électricité (501) et la pluralité de composants de champ magnétique (502) constituent un générateur synchrone auxiliaire (500) pour chacun des systèmes de réglage de pas de pale ; et dans laquelle chacun des générateurs synchrones auxiliaires (500) et son convertisseur électronique de puissance (507 - 509) associé sont reliés électriquement.

8. Éolienne selon la revendication 7, dans laquelle la pluralité d'enroulements producteurs d'électricité (501) et la pluralité de composants de champ magnétique (502) constituent au moins un autre générateur synchrone auxiliaire pour fournir de l'électricité à au moins un autre système auxiliaire.

9. Éolienne selon l'une quelconque des revendications 1 à 6, comprenant une pluralité de pales (103), ayant chacune des pales (103) un système de réglage de pas de pale, comprenant chaque système de réglage de pas de pale un moteur de pas de pale (504 - 506) relié de façon opérationnelle à au moins un actionneur pour changer l'angle de pas de pale de sa pale (103) associée, et un convertisseur électronique de puissance (507 - 509) pour contrôler le moteur de pas de pale (504 - 506) ; dans laquelle la pluralité d'enroulements producteurs d'électricité (501) et la pluralité de composants de champ magnétique (502) constituent un générateur synchrone auxiliaire (500) à enroulements multiples comprenant une série indépendante d'enroulements producteurs d'électricité (501) pour chacun des systèmes de réglage de pas de pale ; et dans laquelle chacune des séries indépendantes d'enroulements producteurs d'électricité (501) et son convertisseur électronique de puissance (507 - 509) associé sont reliés électriquement.

10. Éolienne selon la revendication 9, dans laquelle le générateur synchrone auxiliaire (500) à enroulements multiples comprend au moins une autre série indépendante d'enroulements producteurs d'électricité pour fournir de l'électricité à au moins un autre système auxiliaire.

11. Éolienne selon l'une quelconque des revendications 7 à 10, dans laquelle chaque convertisseur électronique de puissance (507 - 509) est relié électriquement à une ligne électrique principale (513), de façon que chaque convertisseur électronique de puissance (507 - 509) peut recevoir de l'électricité de ladite ligne électrique principale (513).

12. Éolienne selon l'une quelconque des revendications 7 à 11, dans laquelle chaque système de réglage de pas de pale comprend en outre un système de stockage d'électricité relié électriquement à ses enroulements producteurs d'électricité (501) associés et à son convertisseur électronique de puissance (507 - 509) associé, de façon que le système de stockage d'électricité peut stocker de l'électricité des enroulements producteurs d'électricité (501) associés lorsque le moyeu (105) est en rotation, et qu'il peut fournir ladite électricité stockée au convertisseur électronique de puissance (507 - 509) associé.

13. Éolienne selon la revendication 12, dans laquelle chaque système de stockage d'électricité est relié électriquement à une ligne électrique principale (513), de façon que chaque système de stockage d'électricité peut stocker de l'électricité de ladite ligne électrique principale (513).

14. Éolienne selon l'une quelconque des revendications 1 à 13, comprenant en outre un arbre (503) relié de façon opérationnelle au moyeu (105), de façon qu'un mouvement de rotation du moyeu (105) peut être transmis à travers de l'arbre (503), et comprenant en outre une bague collectrice (600) montée sur l'arbre (503) et reliée électriquement aux enroulements producteurs d'électricité (501), de façon que de l'électricité des enroulements producteurs d'électricité (501) peut être transmise à un système auxiliaire qui n'est pas fixé dans le/au moyeu (105).

15. Éolienne selon la revendication 14, lorsqu'elle dépend de l'une quelconque des revendications 12 ou 13, dans laquelle la bague collectrice (600) et chaque système de stockage d'électricité sont reliés électriquement, de façon que la bague collectrice (600) peut recevoir de l'électricité de chaque système de stockage d'électricité.
